# EUROPEAN PATENT APPLICATION

(11) **EP 2 711 754 A1**
(43) Date of publication of application: **26.03.2014**
(21) Application number: 13182778.4
(22) Date of filing: 03.09.2013
(51) Int. Cl.: G02B 6/44

(54) **Water-swellable element for optical-fiber cables**

(30) Priority: 20.09.2012 US 201261703633 P
(71) Applicant: Draka Comteq B.V., 1083 HJ Amsterdam (NL)
(72) Inventor: Smartt, William Mark, MOORESVILLE, NC North Carolina 28117 (US)
(74) Representative: Algemeen Octrooi- en Merkenbureau B.V.

(57) **Abstract**

An optical-fiber-cable structure includes an optical fiber surrounded by a protective polymeric tube. A water-blocking element (10) is positioned between the optical fiber and the protective tube. The water-blocking element includes water swellable particulate powder 12) thermally bonded to a fibrous carrier element (11).

## Description

### FIELD OF THE INVENTION

The present invention relates to an improved water swellable element for optical-fiber cables.

### BACKGROUND

Water blocking in optical-fiber buffer tubes and fiber optic cables typically has been accomplished by using petroleum based filling gels (e.g., grease). By completely filling all of the free space inside a buffer tube that contains an optical fiber or optical-fiber bundle, the filling gel blocks the ingress of water into the fiber optic cable.

Moreover, being a thixotropic material, the filling gel also tends to mechanically couple the optical fiber(s) to the buffer tube. Such mechanical coupling prevents the optical fiber(s) from retracting inside the buffer tube as the buffer tube is processed during manufacturing, as the cable is installed or otherwise handled in the field, or as the cable is subjected to thermally induced dimensional changes from environmental exposure.

Although relatively effective for controlling cable flooding, the petroleum based filling gels are inconvenient during cable repair and optical-fiber splicing. The use of such gels requires cleaning the petroleum-based material from optical fibers prior to splicing (and sometimes from equipment and personnel, too), which can be messy and time consuming. Consequently, using conventional filling greases is often undesirable.

Various dry-cable designs have been developed to eliminate filling greases while providing some water-blocking and coupling functions. In either loose tube fiber cables or ribbon cables, a totally dry design eliminates the filling gel from the enclosed buffer tubes. In a totally dry cable, for example, filling gel may be replaced by a water-blocking element, such as a tape or a yarn carrying a water-swellable material (e.g., water-swellable powder). Water-swellable powders are dry to the touch and, when bound to a carrier tape or yarn, can be readily removed during field operations (e.g., splicing).

Optical fibers are sensitive to mechanical loads, which can cause undesirable microbending. Those having ordinary skill in the art know that microbending is induced when small stresses are applied along the length of an optical fiber, perturbing the optical path through microscopically small deflections in the core.

Water-swellable powders consist of finely ground hard particles. The size and hardness of such particulates may be sufficient to cause microbending and optical attenuation in the optical fibers they contact.

Accordingly, there is a need for a more effective solution to dry cable design. In particular, there is a need for a grease-free water blocking element that reduces microbending losses in optical fibers yet effectively blocks the longitudinal movement of water inside a fiber optic cable and its constituent buffer tubes.

### SUMMARY

Thus, in a first facet the present invention relates to an optical-fiber-cable structure, comprising: an optical fiber; a protective tube surrounding said optical fiber; and a water-blocking element positioned between said optical fiber and said protective tube, said water-blocking element comprising water-swellable particulate powder thermally bonded to a fibrous carrier element; wherein said fibrous carrier element comprises multicomponent fibers having a first fiber component and a second fiber component, said first fiber component having a lower bonding temperature than said second fiber component; and wherein said water-blocking element is substantially free of an adhesive material for the purpose of bonding said water swellable particulate powder to said fibrous carrier element.

In a second facet, the present invention relates to an optical-fiber-cable structure, comprising: an optical fiber; a protective tube surrounding said optical fiber; and a water-blocking element positioned between said optical fiber and said protective tube, said water-blocking element comprising water-swellable particulate powder thermally bonded to a fibrous carrier element; wherein said fibrous carrier element comprises comingled fibers having a plurality of fibers formed from a first fiber material and a plurality of fibers formed from a second fiber material, said first fiber material having a lower bonding temperature than said second fiber material; and wherein said water-blocking element is substantially free of an adhesive material for the purpose of bonding said water swellable particulate powder to said fibrous carrier element.

In an embodiment of said first facet said protective tube comprises a polymeric material.

In an embodiment of said first or second facets, said fibrous carrier element is a nonwoven.

In an embodiment of said first or second facets, said fibrous carrier element is a yarn.

In an embodiment of said first facet, said fibrous carrier element consists essentially of bicomponent fibers having a bicomponent-fiber core and a bicomponent-fiber sheath, said bicomponent-fiber core having a higher bonding temperature than said bicomponent-fiber sheath.

In an embodiment of said second facet, said multicomponent fibers comprise bicomponent fibers having a bicomponent-fiber core and a bicomponent-fiber sheath, said bicomponent-fiber core having a higher bonding temperature than said bicomponent-fiber sheath.

In an embodiment of said first or second facets, said water blocking element at least partially surrounds said optical fiber within said protective tube.

In an embodiment of said first or second facets, said water-swellable particulate powder is thermally bonded to only one side of said fibrous carrier element; and said fibrous carrier element is positioned adjacent to said optical fiber and said water swellable powder is positioned opposite said optical fiber.

In an embodiment of said first or second facets, said first fiber component (first facet) or material (second facet) comprises polyethylene.

In an embodiment of said first or second facets, said second fiber component (first facet) or material (second facet) comprises polypropylene or polyester or polyethylene terephthalate.

In an embodiment of said first or second facets, said water swellable particulate powder is thermally bonded to said fibrous carrier element by (i) heating said fibrous carrier element to a temperature that is at or above the bonding temperature of said first fiber component but below the bonding temperature of said second fiber component, and (ii) bonding said water swellable particulate powder to said fibrous carrier element.

In an embodiment of said first or second facets, bonding said water swellable particulate powder to said fibrous carrier element comprises bonding said water swellable particulate powder to said fibrous carrier element when said first fiber component is at or above its bonding temperature but when said second fiber component is below its bonding temperature.

In a third facet, the present invention relates to an optical-fiber-cable structure, comprising: an optical fiber; a protective tube surrounding said optical fiber; and a water-blocking element positioned between said optical fiber and said protective tube, said water-blocking element comprising water-swellable particulate powder thermally bonded to a fibrous carrier tape, preferably a fabric; wherein said fibrous carrier tape consists essentially of bicomponent fibers having a bicomponent-fiber core and a bicomponent-fiber sheath, said bicomponent-fiber core having a higher bonding temperature than said bicomponent-fiber sheath; and wherein said water-blocking element is substantially free of an adhesive material for the purpose of bonding said water swellable particulate powder to said fibrous carrier tape.

In an embodiment of said third facet, said water swellable particulate powder is thermally bonded to said fibrous carrier tape by (i) heating said fibrous carrier tape to a temperature that is at or above the bonding point of said bicomponent-fiber sheath but below the bonding point of said bicomponent-fiber core, and (ii) bonding said water swellable particulate powder to said fibrous carrier tape when said sheath is in a molten or softened state but when said core is in a solid state or (ii) applying said water swellable particulate powder to said fibrous carrier tape when said sheath is in a molten or softened state but when said core is in a solid state.

In a fourth facet, the present invention relates to a method for making an optical-fiber-cable structure, comprising: providing a fibrous carrier element formed of multicomponent fibers having a first fiber component and a second fiber component, the first fiber component having a lower bonding temperature than the second fiber component; heating the fibrous carrier element to a temperature that is at or above the bonding temperature of the first fiber component but below the bonding temperature of the second fiber component; bonding water swellable particulate powder to the fibrous carrier element to form a water-blocking element; and positioning an optical fiber and the water-blocking element within a protective tube.

In a fifth facet, the present invention relates to a method for making an optical-fiber-cable structure, comprising: providing a fibrous carrier element formed of comingled fibers having a plurality of fibers formed from a first fiber material and a plurality of fibers formed from a second fiber material, the first fiber material having a lower bonding temperature than the second fiber material; heating the fibrous carrier element to a temperature that is at or above the bonding temperature of the first fiber material but below the bonding temperature of the second fiber material; bonding water swellable particulate powder to the fibrous carrier element to form a water-blocking element; and positioning an optical fiber and the water-blocking element within a protective tube.

In an embodiment of said fourth and fifth facets the step of positioning preferably comprising (i) at least partially surrounding the optical fiber with the water-blocking element and (ii) extruding a polymeric tube around the optical fiber and the water-blocking element to form the optical-fiber-cable structure.

In an embodiment of said fourth and fifth facets, the step of bonding water swellable particulate powder to the fibrous carrier element comprises, after the step of heating the fibrous carrier element, applying the water swellable particulate powder to the fibrous carrier element when the first fiber component of claim 1 or material of claim 2 is at or above its bonding temperature but when the second fiber component is below its bonding temperature.

In an embodiment of said fourth and fifth facets, comprises applying the water swellable particulate powder to the fibrous carrier element before or during the step of heating the fibrous carrier element.

Accordingly, in one aspect, the present invention embraces an improved, dry optical-fiber-cable structure (e.g., an optical-fiber buffer tube with or without a surrounding jacket) possessing water blocking capabilities. The optical-fiber-cable structure typically includes one or more optical fibers (e.g., a glass fiber enclosed by one or more coating layers) surrounded by a protective tube (e.g., a cable jacket and/or a buffer tube). A water-blocking element (e.g., a tape or yarn) is positioned between the optical fibers and the buffer tube.

The water-blocking element includes water-swellable particulate powder thermally bonded to a fibrous carrier tape or fibrous carrier yarn. The fibrous carrier tape or fibrous carrier yarn is typically formed from multicomponent fibers (e.g., bicomponent fibers) having at least a first fiber component and a second fiber component. More typically, the fibrous carrier tape or fibrous carrier yarn is formed from bicomponent fibers having a core and a sheath (i.e., sheath-core polymeric fibers). The first fiber component (e.g., the sheath) typically has a lower bonding temperature than the second fiber component (e.g., the core), which facilitates thermal bonding (e.g., melt bonding) of the water-swellable particulate powder to the fibrous carrier tape or fibrous carrier yarn.

Where the fibrous carrier tape or fibrous carrier yarn includes multicomponent fibers, the water-swellable particulate powder is typically thermally bonded to the fibrous carrier tape or fibrous carrier yarn (e.g., to constituent bicomponent sheath-core fibers) by heating the fibrous carrier tape or fibrous carrier yarn to a temperature higher than the first fiber component's bonding temperature (e.g., higher than a sheath's softening point or melting point) but lower than the bonding temperature of the second fiber component (e.g., lower than a core's softening point or melting point).

Alternatively, the fibrous carrier tape or fibrous carrier yarn may be formed from comingled fibers having different thermal properties (e.g., relatively lower and higher softening points or melting points). In this regard, a plurality of the comingled fibers is formed from a first fiber material, and a plurality of the comingled fibers is formed from a second fiber material. The first fiber material, which could include multicomponent fibers such as sheath-core polymeric fibers, typically has a lower bonding temperature than the second fiber material. This facilitates thermal bonding (e.g., melt bonding) of the water swellable particulate powder to the fibrous carrier tape or fibrous carrier yarn.

Where the fibrous carrier tape or fibrous carrier yarn includes comingled fibers, the water-swellable particulate powder is typically thermally bonded to the fibrous carrier tape or fibrous carrier yarn by heating the fibrous carrier tape or fibrous carrier yarn to a temperature higher than the first fiber material's bonding temperature but lower than the second fiber material's bonding temperature. The water swellable particulate powder is typically thereupon applied to the fibrous carrier tape or fibrous carrier yarn (e.g., when the first fiber component or the first fiber material is in a molten state (or softened state) but when the second fiber component or second fiber material is in a solid state). Alternatively, the water swellable particulate powder may be applied before or during the heating step.

The thermal bonding of the water-swellable particulate powder to the fibrous carrier tape or fibrous carrier yarn renders unnecessary the use of additional adhesive materials. In this regard, liquid adhesive materials (e.g., liquid binder sprays) can cause undesirable agglomeration of the water-swellable particulate powder on or near the surface of the fibrous carrier tape or fibrous carrier yarn. This agglomeration of the water-swellable particulates can exacerbate microbending. Therefore, the resulting water-blocking element of the present invention is typically substantially free of any additional adhesive material for the purpose of bonding the water-swellable particulate powder to the fibrous carrier tape or fibrous carrier yarn.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 schematically depicts a water-blocking element in accordance with the present invention.
Figure 2 schematically depicts a bicomponent fiber in accordance with the present invention.
Figure 3 is a photograph depicting agglomeration of water swellable particulate powder after its application to a fibrous nonwoven via a liquid adhesive.

### DETAILED DESCRIPTION

In one aspect, the present invention embraces a dry optical-fiber-cable structure (e.g., an optical-fiber buffer tube with or without a surrounding jacket) possessing excellent water-blocking capabilities and improved microbending performance.

In this regard, an optical-fiber-cable structure in accordance with the present invention typically includes one or more optical fibers surrounded by a tube (e.g., a protective tube, such as a buffer tube or a cable jacket). That is, the optical fibers are positioned within the cavity defined by the tube (e.g., a protective tube formed from a polymeric material). A water-blocking element is positioned between the optical fibers and the polymeric tube. The water-blocking element includes water swellable particulate powder thermally bonded to a fibrous carrier element (e.g., a fibrous carrier tape or fibrous carrier yarn).

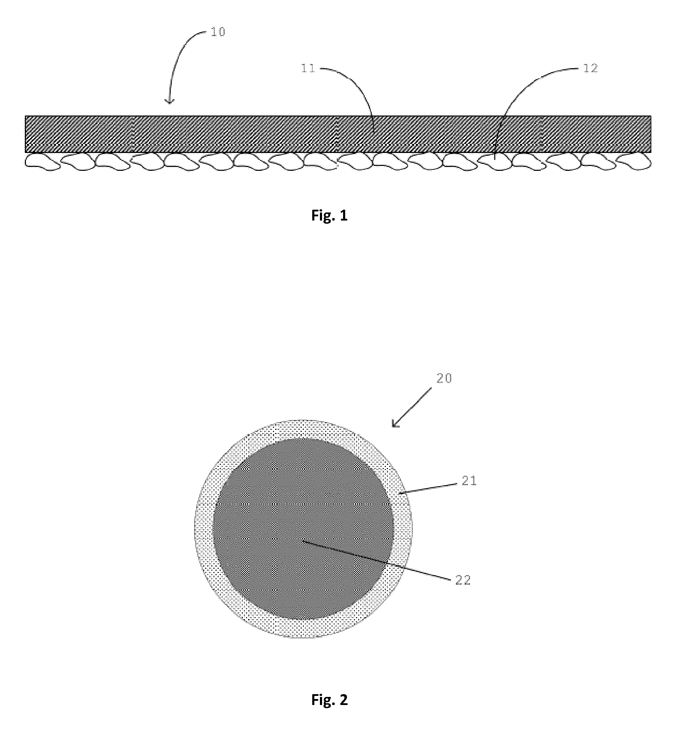

Figure 1 schematically depicts an exemplary water blocking element 10, namely a water-swellable tape structure, in accordance with the present invention. As depicted in Figure 1, the water-blocking element 10 is typically a two-layer structure having water swellable particulate powder 12 thermally bonded to a carrier tape 11. The water swellable particulate powder 12 is typically melt bonded to the carrier tape 11 so that the water blocking element 10 may be substantially free of adhesive materials, such as a binder material, for the purpose of bonding the water swellable particulate powder to the carrier tape. Although Figure 1 depicts the water swellable particulate powder 12 as being bonded to one side of the carrier tape 11, it is within the scope of the present invention for the water swellable particulate powder 12 to be interspersed within the carrier tape 11.

In one alternative embodiment, the water-swellable particulate powder may be sandwiched between two carrier tapes. In another embodiment, the carrier tape may be bonded to a secondary tape.

The carrier element is typically formed from multicomponent fibers (e.g., bicomponent fibers). Accordingly, the carrier tape 11 is typically a fibrous fabric (e.g., knit, woven, or nonwoven) that includes multicomponent fibers (e.g., bicomponent fibers). More typically, the fibrous carrier tape 11 is a nonwoven formed from bicomponent fibers.

The multicomponent fibers typically have at least a first fiber component and a second fiber component. The first fiber component typically has a lower bonding temperature than the second fiber component.

An exemplary multicomponent fiber for use in the carrier element (e.g., the carrier tape 11) is schematically depicted in Figure 2 as a bicomponent fiber 20 having a first fiber component 21 (i.e., a sheath) and a second fiber component 22 (i.e., a core). The second fiber component 22 is typically formed from a polymeric material having a higher bonding temperature than that of the first fiber component 21. As depicted in Figure 2, the bicomponent fiber 20 typically includes a polymeric sheath 21 (i.e., a bicomponent fiber sheath) surrounding a polymeric core 22 (i.e., a bicomponent-fiber core). Although the bicomponent fiber 20 typically has a sheath-core design, other bicomponent-fiber designs, such as matrix fibers (e.g., an islands-in-the-sea design), matrix fibril fibers, and side by side fibers, are within the scope of the present invention.

As will be understood by those having ordinary skill in the art, the term "softening point" (e.g., the glass transition temperature) generally refers to a property of amorphous polymers (e.g., amorphous regions within semi-crystalline polymers) whereas the term "melting point" generally refers to a property of crystalline polymers (e.g., crystalline regions within semi crystalline polymers). As used herein, the term "bonding temperature" refers to the "softening point" or "melting point" of a particular material where the material has sufficiently softened or melted, as is appropriate with respect to the particular material, to facilitate thermal bonding (e.g., melt bonding of water-swellable particulate powder to the carrier element).

In another embodiment, the carrier element (e.g., carrier tape 11) is formed from comingled fibers. A plurality of the comingled fibers is typically formed from a first fiber material and a plurality of the comingled fibers is typically formed from a second fiber material. The first fiber material typically has a lower bonding temperature than the second fiber material.

In yet another embodiment, the carrier tape 11 may be formed from yarn formed from the foregoing multicomponent and/or comingled fibers.

By way of example and with reference to Figure 2, the second fiber component (e.g., core 22 in a sheath-core fiber) or the second fiber material (e.g., in commingled fibers) may be formed from polypropylene (PP), such as isotactic polypropylene, or polyester, such as polyethylene terephthalate (PET) or polybutylene terephthalate (PBT). Polypropylene (PP) typically has a melting point of at least 130°C (e.g., 130-170°C). Polyethylene terephthalate (PET) typically has a melting point of at least 250°C.

The first fiber component (e.g., sheath 21 in a sheath core fiber) or the first fiber material (e.g., in commingled fibers) may be formed from polyethylene (PE), which typically has a melting point of less than about 115°C (e.g., 105-115°C), atactic polypropylene, or an elastomer having a low bonding temperature. As will be appreciated by those having ordinary skill in the art, one or more fiber components may be modified to affect compatibility with one or more materials (e.g., a buffer tube or optical fibers) within the optical-fiber-cable structure. For example, if both polyethylene terephthalate (PET) and polyethylene (PE) are used in a multicomponent fiber, the polyolefin may be modified (e.g., with maleic anhydride) to improve bonding between the polyethylene terephthalate and the polyethylene.

In another aspect, the present invention embraces an improved method of manufacturing a water-blocking element that both provides excellent water-blocking capabilities and facilitates improved optical-fiber microbending performance.

In accordance with the foregoing, water-swellable particulates are thermally bonded to a fibrous carrier element, typically a nonwoven carrier tape, formed from multicomponent fibers and/or comingled fibers. In this regard and as noted, the multicomponent fibers typically have a first fiber component with a relatively lower bonding temperature and a second fiber component with a relatively higher bonding temperature. The commingled fibers typically include a plurality of fibers formed from a first fiber material and a plurality of fibers formed from a second fiber material; the second fiber material has a relatively higher bonding temperature as compared with the bonding temperature of the first fiber material.

The fibrous carrier element is typically first heated to a temperature that is (i) higher than the bonding temperature of the first fiber component (e.g., the fiber sheath) or first fiber material (e.g., in commingled fibers) but (ii) lower than the bonding temperature of the second fiber component (e.g., the fiber core) or second fiber material (e.g., in commingled fibers). As will be appreciated by those having ordinary skill in the art, this heating step can occur during the formation of the fibrous carrier element (e.g., while the carrier tape or carrier yarn is still hot from manufacturing) or as a distinct step to a previously manufactured, cool fibrous carrier element. In either case, water swellable particulate powder typically is then applied to the heated fibrous carrier element. In other words, water swellable particulate powder may be applied to the fibrous carrier element when (i) the first fiber component or first fiber material is in a molten state (or a sufficiently softened state) but (ii) the second fiber component or second fiber material is in a sufficiently solid state.

This application of the water-swellable particulate powder advantageously achieves a thermal bond between the water swellable particulate powder and the carrier element (e.g., once the carrier element has sufficiently cooled).

Alternatively, the water swellable particulate powder may be applied before or during the heating of the carrier element. As will be appreciated by those having ordinary skill in the art, when the water swellable particulate powder is applied either before or during the heating step, the water swellable particulate powder typically will not begin to thermally bond with the carrier element until the carrier element has been sufficiently heated to the first bonding temperature.

As noted, it is within the scope of the present invention for the water swellable particulate powder to be interspersed within the carrier element (e.g., the fibrous carrier tape or the fibrous carrier yarn). In this regard, an air-lay process may be employed to achieve interspersion of the water swellable particulate powder within the carrier element (e.g., the fibrous carrier tape). If an air-lay process is employed, the carrier element is typically heated after the water swellable particulate powder is interspersed within the carrier element (e.g., the fibrous carrier tape).

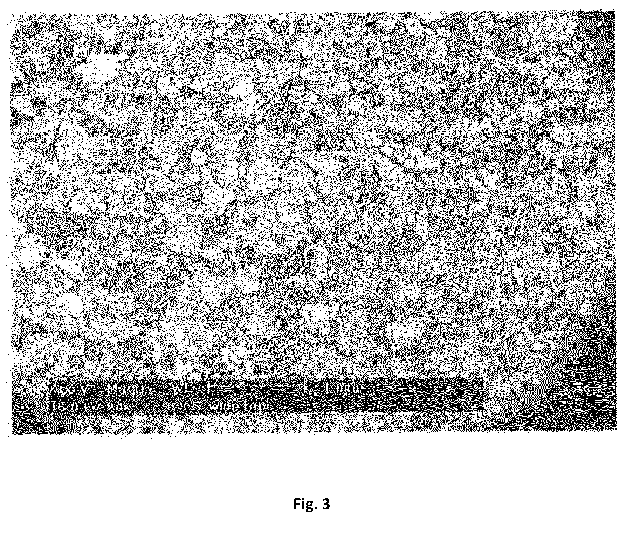

In contrast with the foregoing thermal bonding, adhesive bonding requires the application of a liquid adhesive (e.g., an aqueous binder) in order to adhesively bond the water swellable particulate powder to the carrier element. By way of illustration, Figure 3 depicts undesirable agglomeration of water swellable particulate powder after its application to a fibrous nonwoven via a liquid adhesive. The liquid adhesive typically causes the water-swellable particulate powder to agglomerate into larger particles. Water-swellable particulate powder having large particles is generally undesirable, because large particles can lead to optical-fiber microbending and thus undesirable attenuation.

By employing thermal bonding and thereby avoiding the use of an adhesive to adhesively bond the water-swellable particulate powder to the carrier element, undesirable agglomeration of the water-swellable particulate powder can be avoided.

The size (and size distribution) of the particulates in the water-swellable powder may influence the deformation of the water blocking element; water swellable powder may cause a carrier element to deform. Thus, the size and quantity of the water swellable particulates should be selected to prevent water swellable powder "bumps" from causing optical attenuation (e.g., microbending). Moreover, the carrier element (e.g., the carrier tape) is typically not so thin as to readily deform, thereby allowing bumps caused by the water-swellable particulate powder to be transferred through the carrier element to the optical fibers. By way of example, the water-swellable particulate powders contained within a water blocking element in accordance with the present invention may possess the preferred particle-size distributions as set forth in U.S. Patent No. 6,504,979 and U.S. Patent No. 6,631,229.

Exemplary water-swellable materials typically include super absorbent polymers (SAPs), such as particulates of sodium polyacrylate, polyacrylate salt, or acrylic acid polymer with sodium salt.

A water-blocking element as described herein may be positioned within an optical-fiber cable between a buffer tube and its constituent optical fiber(s) such that the water blocking element at least partially encloses (e.g., surrounds) the optical fiber(s). The width of the water blocking element is typically the same as the inner circumference of the buffer tube. In some embodiments, however, the width of the water-blocking element is at least about ten percent greater (e.g., 15-30 percent greater) than the buffer tube's inner circumference.

The water blocking element is typically oriented within the buffer tube such that the carrier element (e.g., carrier tape) is positioned between the optical fiber(s) and the water swellable particulate powder. See Figure 1. By positioning the carrier element between the optical fiber(s) and the water swellable particulate powder that is thermally bonded to the carrier element, contact between dry (e.g., inactivated) water swellable particulate powder and the optical fiber(s) can be avoided. In other words, the carrier element typically functions as a barrier between the inactivated water swellable particulate powder and the optical fibers.

Inhibiting contact between dry water-swellable particulate powder and the optical fiber(s) is desirable, because contact between the optical fiber(s) and the dry water swellable particulate powder (e.g., before its activation) could cause unwanted microbending in the optical fibers.

The foregoing notwithstanding, it is within the scope of the present invention for the water-blocking element (e.g., the fibrous carrier tape) to be oriented so that the carrier element is not positioned between the water swellable particulate powder and the optical fibers.

The water-blocking element is typically positioned directly adjacent to the inner wall of the buffer tube such that there is little, if any, unfilled space between the inner wall of the buffer tube and the water blocking element. Otherwise, such unfilled space would allow water within the buffer tube to migrate longitudinally along the buffer tube's inner wall. By way of example, the water blocking element may be secured to the buffer tube by using an adhesive, by frictional coupling of the water-blocking element and the buffer tube, or by melt-bonding part of the water blocking element to the buffer tube during extrusion (e.g., by heating the water-blocking element to a temperature that is higher than the bonding temperature of the first fiber component or the first fiber material). Suitable techniques for securing buffer-tube elements (e.g., via adhesives) are disclosed in U.S. Patent No. 7,515,795 of the present applicant .

The water-blocking element of the present invention provides improved water blocking within a buffer tube and/or cable. If water intrusion (e.g., flooding) does occur, water tends to migrate radially inward toward the optical fibers (i.e., the optical-fiber element) contained within a buffer tube. As water comes into contact with the water swellable particulate powder, the water swellable particulate powder will expand into the cavities and interstices surrounding the optical fibers. In this way, the water blocking element helps to prevent transport of the water along the length of the buffer tubes and/or optical fiber cable.

Some unfilled space is usually provided adjacent the optical fibers (i.e., between the optical fibers and the carrier element). In this regard, free space, or so called annular free space, between the optical fibers and the carrier element within a buffer tube allows the optical fibers to move more or less freely within the cable. For example, although the glass fibers and a polymeric buffer tube may respond differently to temperature changes, the optical fibers are not fixedly secured to the water blocking element. Consequently, the optical fibers are not forced to move as the buffer tube thermally expands or contracts.

Moreover, as used herein in this context, the term "annular free space" is intended to characterize unfilled space that can exist between the optical-fiber element (i.e., the optical fibers) and its surrounding structure (i.e., around the entire perimeter of the optical-fiber element) regardless of the respective shapes of the optical-fiber-cable structure and its components (e.g., a rectangular ribbon stack within a round buffer tube). In this regard, the term "annular free space" as used herein is not limited to the regular gap between two concentric tubes (or casings) having circular cross-sections (i.e., a perfect annulus).

That said, it is within the scope of the present invention to further include a coupling material between the optical fibers and the carrier element of the water blocking element. Those having ordinary skill in the art will appreciate that to facilitate the transport of water to the water swellable particulate powder (and thereby activating the water-blocking characteristics of the water-swellable particulate powder), the coupling material may be discontinuously provided upon the surface of the carrier element.

An exemplary coupling material is disclosed in U.S. Patent No. 7,724,999 of the present applicant. Likewise, the exemplary use of discrete domains of adhesive material to couple a water-swellable element and optical fibers is disclosed in U.S. Patent No. 7,599,589 and U.S. Patent No. 7,567,739 of the present applicant.

The present water-blocking elements may be included in optical fiber cables and buffer tubes having relatively high filling coefficients and fiber densities. Furthermore, the smoothness of the present water-blocking elements facilitates acceptable cable-attenuation performance. In this regard, microscopy (e.g., using a scanning electron microscope (SEM)) has qualitatively confirmed that water blocking elements described herein are typically smoother than conventional dry water blocking elements.

As used herein, the term "buffer-tube filling coefficient" refers to the ratio of the total cross-sectional area of the optical fibers within a buffer tube versus the inner cross-sectional area of that buffer tube (i.e., defined by the inner boundary of the buffer tube). By way of clarification, the term "buffer-tube filling coefficient" excludes ribbon matrix materials (e.g., subunit and common ribbon matrices).

Additionally, as used herein, the term "cumulative buffer-tube filling coefficient" refers to the ratio of the total cross-sectional area of the optical fibers enclosed within buffer tubes versus the sum of the inner cross-sectional areas of the buffer tubes containing those optical fibers.

Buffer tubes containing the present water-blocking elements may have a buffer-tube filling coefficient of at least about 0.20, typically about 0.30 or more (e.g., at least about 0.40). Even higher filling coefficients are possible in buffer tubes containing bend-insensitive fibers. For example, such buffer tubes typically have a buffer-tubes filling coefficient of greater than 0.50, more typically at least about 0.60 (e.g., 0.70 or more). In this regard, buffer tubes in accordance with the present invention typically include between 12 and 432 optical fibers (e.g., 216 optical fibers configured as a 12x18 ribbon stack). That said, buffer tubes having higher fiber counts (e.g., at least 864 optical fibers) are within the scope of the present invention.

As described herein, by controlling (i) the particulate size distribution of water swellable powder and (ii) certain parameters of a water blocking element (e.g., thickness, strength, hardness, smoothness, and material) a considerable reduction in optical fiber microbending (and/or size reduction of the various buffer-tube and cable structures that enclose the optical fibers) can be achieved. Accordingly, optical-fiber cables containing the present water blocking elements typically demonstrate exceptional resistance to attenuation as determined by temperature cycle testing, even though these cables typically possess relatively high buffer tube filling coefficients. For example, optical fiber cables in accordance with the present invention meet or exceed temperature cycling requirements as set forth in GR 20 CORE (6.6.3, Issue 3, May 2008), hereinafter referred to as the "GR 20 CORE temperature cycling requirement."

Moreover, optical-fiber cables containing the present water blocking elements typically demonstrate exceptional resistance to water penetration as determined by water penetration testing. For example, optical fiber cables in accordance with the present invention meet or exceed water penetration requirements as set forth in GR 20 CORE (6.6.7, Issue 3, May 2008), hereinafter referred to as the "GR 20 CORE water penetration requirement."

The optical-fiber cables according to the present invention may also meet or exceed certain Telcordia Technologies generic requirements for optical-fiber cables as set forth in GR 20 CORE (Issue 2, July 1998; Issue 3, May 2008), such as low temperature and high temperature cable bend (6.5.3), impact resistance (6.5.4), compression (6.5.5), tensile strength of cable (6.5.6), cable twist (6.5.7), cable cyclic flexing (6.5.8), mid-span buffer tube performance of stranded cable (6.5.11), cable aging (6.6.4), and cable freezing (6.6.5).

The water-blocking elements according to the present invention may be deployed in various structures, such as those exemplary structures disclosed hereinafter.

As noted, one or more of the present water-blocking elements may be enclosed within a buffer tube. For instance, one or more water-blocking elements may be deployed in either a single fiber loose buffer tube or a multi-fiber loose buffer tube. With respect to the latter, multiple optical fibers may be bundled or stranded within a buffer tube or other structure. In this regard, within a multi-fiber loose buffer tube, fiber sub-bundles may be separated with binders (e.g., each fiber sub bundle is enveloped in a binder). Moreover, fan-out tubing may be installed at the termination of such loose buffer tubes to directly terminate loose buffered optical fibers with field installed connectors.

Such buffer tubes may contain conventional glass fibers or bend-insensitive glass fibers. An exemplary bend-insensitive glass fiber for use in the present invention is disclosed in U.S. Patent No. 7,623,747 for a Single Mode Optical Fiber.

With respect to conventional and bend-insensitive optical fibers, the component glass fiber typically has an outer diameter of about 125 microns. With respect to an optical fiber's surrounding coating layers, the primary coating typically has an outer diameter of between about 175 microns and about 195 microns (i.e., a primary coating thickness of between about 25 microns and 35 microns) and the secondary coating typically has an outer diameter of between about 235 microns and about 265 microns (i.e., a secondary coating thickness of between about 20 microns and 45 microns). Optionally, the optical fiber may include an outermost ink layer, which is typically between two and ten microns in thickness.

In one alternative embodiment, an optical fiber may possess a reduced diameter (e.g., an outermost diameter between about 150 microns and 230 microns). In this alternative optical fiber configuration, the thickness of the primary coating and/or secondary coating is reduced, while the diameter of the component glass fiber is maintained at about 125 microns. (Those having ordinary skill in the art will appreciate that, unless otherwise specified, diameter measurements refer to outer diameters.)

By way of illustration, in such exemplary embodiments the primary coating layer may have an outer diameter of between about 135 microns and about 175 microns (e.g., about 160 microns), typically less than 165 microns (e.g., between about 135 microns and 150 microns) and usually more than 140 microns (e.g., between about 145 microns and 155 microns, such as about 150 microns).

Moreover, in such exemplary embodiments the secondary coating layer may have an outer diameter of between about 150 microns and about 230 microns (e.g., more than about 165 microns, such as 190-210 microns or so), typically between about 180 microns and 200 microns. In other words, the total diameter of the optical fiber is reduced to less than about 230 microns (e.g., between about 195 microns and 205 microns, and especially about 200 microns). By way of further illustration, an optical fiber may employ a secondary coating of about 197 microns at a tolerance of +/- 5 microns (i.e., a secondary-coating outer diameter of between 192 microns to 202 microns). Typically, the secondary coating will retain a thickness of at least about 10 microns (e.g., an optical fiber having a reduced thickness secondary coating of between 15 microns and 25 microns).

In another alternative embodiment, the outer diameter of the component glass fiber may be reduced to less than 125 microns (e.g., between about 60 microns and 120 microns), perhaps between about 70 microns and 115 microns (e.g., about 80-110 microns). This may be achieved, for instance, by reducing the thickness of one or more cladding layers. As compared with the prior alternative embodiment, (i) the total diameter of the optical fiber may be reduced (i.e., the thickness of the primary and secondary coatings are maintained in accordance with the prior alternative embodiment) or (ii) the respective thicknesses of the primary and/or secondary coatings may be increased relative to the prior alternative embodiment (e.g., such that the total diameter of the optical fiber might be maintained).

By way of illustration, with respect to the former, a component glass fiber having a diameter of between about 90 and 100 microns might be combined with a primary coating layer having an outer diameter of between about 110 microns and 150 microns (e.g., about 125 microns) and a secondary coating layer having an outer diameter of between about 130 microns and 190 microns (e.g., about 155 microns). With respect to the latter, a component glass fiber having a diameter of between about 90 and 100 microns might be combined with a primary coating layer having an outer diameter of between about 120 microns and 140 microns (e.g., about 130 microns) and a secondary coating layer having an outer diameter of between about 160 microns and 230 microns (e.g., about 195-200 microns).

Reducing the diameter of the component glass fiber might make the resulting optical fiber more susceptible to microbending attenuation. That said, the advantages of further reducing optical-fiber diameter may be worthwhile for some optical-fiber applications.

As noted, optical fibers contained within buffer tubes and cables in accordance with the present invention typically include one or more coating layers (e.g., a primary coating and a secondary coating). At least one of the coating layers - typically the secondary coating - may be colored and/or possess other markings to help identify individual fibers. Alternatively, a tertiary ink layer may surround the primary and secondary coatings.

Such fibers may include a low-modulus primary coating for reducing the risk of microbending. A low-modulus primary coating can be combined with bend-insensitive fiber for providing unexpectedly superior reductions in microbend sensitivity.

As will be known by those having ordinary skill in the art, an exemplary buffer tube enclosing water-blocking elements as disclosed herein may be formed of polyolefins (e.g., polyethylene or polypropylene), including fluorinated polyolefins, polyesters (e.g., polybutylene terephthalate), polyamides (e.g., nylon), as well as other polymeric materials and blends. In general, a buffer tube may be formed of one or more layers. The layers may be homogeneous or include mixtures or blends of various materials within each layer.

In this context, the buffer tube may be extruded (e.g., an extruded polymeric material) or pultruded (e.g., a pultruded, fiber-reinforced plastic). By way of example, the buffer tube may include a material to provide high temperature and chemical resistance (e.g., an aromatic material or polysulfone material).

Although buffer tubes typically have a circular cross section, buffer tubes alternatively may have an irregular or non-circular shape (e.g., an oval or a trapezoidal cross section).

Alternatively, one or more of the present water-blocking elements may be contained within structures such as a metal tube or an outer protective sheath encapsulating one or more optical fibers. In either structure, no intermediate buffer tube is necessarily required.

Multiple optical fibers may be sandwiched, encapsulated, and/or edge bonded to form an optical-fiber ribbon. Optical fiber ribbons can be divisible into subunits (e.g., a twelve fiber ribbon that is splittable into six-fiber subunits). Moreover, a plurality of such optical-fiber ribbons may be aggregated to form a ribbon stack, which can have various sizes and shapes.

For example, it is possible to form a rectangular ribbon stack or a ribbon stack in which the uppermost and lowermost optical-fiber ribbons have fewer optical fibers than those toward the center of the stack. This construction may be useful to increase the density of optical elements (e.g., optical fibers) within the buffer tube and/or cable.

In general, it is desirable to increase the filling of transmission elements in buffer tubes or cables, subject to other constraints (e.g., cable or mid-span attenuation). The optical elements themselves may be designed for increased packing density. For example, the optical fiber may possess modified properties, such as improved refractive-index profile, core or cladding dimensions, or primary coating thickness and/or modulus, to improve microbending and macrobending characteristics.

By way of example, a rectangular ribbon stack may be formed with or without a central twist (i.e., a "primary twist"). Those having ordinary skill in the art will appreciate that a ribbon stack is typically manufactured with rotational twist to allow the tube or cable to bend without placing excessive mechanical stress on the optical fibers during winding, installation, and use. In a structural variation, a twisted (or untwisted) rectangular ribbon stack may be further formed into a coil-like configuration (e.g., a helix) or a wave like configuration (e.g., a sinusoid). In other words, the ribbon stack may possess regular "secondary" deformations.

As will be known to those having ordinary skill in the art, such optical-fiber ribbons may be positioned within a buffer tube or other surrounding structure, such as a buffer tube-free cable, that contain water-blocking elements according to the present invention. Subject to certain restraints (e.g., attenuation) it is desirable to increase the density of elements such as optical fibers or optical-fiber ribbons within buffer tubes and/or optical-fiber cables.

A plurality of buffer tubes containing optical fibers (e.g., loose or ribbonized fibers) may be positioned externally adjacent to and stranded around a central strength member. This stranding can be accomplished in one direction, helically, known as "S" or "Z" stranding, or Reverse Oscillated Lay stranding, known as "S-Z" stranding. Stranding about the central strength member reduces optical-fiber strain when cable strain occurs during installation and use.

Those having ordinary skill in the art will understand the benefit of minimizing fiber strain for both tensile cable strain and longitudinal compressive cable strain during installation or operating conditions.

With respect to tensile cable strain, which may occur during installation, the cable will become longer while the optical fibers can migrate closer to the cable's neutral axis to reduce, if not eliminate, the strain being translated to the optical fibers. With respect to longitudinal compressive strain, which may occur at low operating temperatures due to shrinkage of the cable components, the optical fibers will migrate farther away from the cable's neutral axis to reduce, if not eliminate, the compressive strain being translated to the optical fibers.

In a variation, two or more substantially concentric layers of buffer tubes may be positioned around a central strength member. In a further variation, multiple stranding elements (e.g., multiple buffer tubes stranded around a strength member) may themselves be stranded around each other or around a primary central strength member.

Alternatively, a plurality of buffer tubes containing optical fibers (e.g., loose or ribbonized fibers) may be simply placed externally adjacent to the central strength member (i.e., the buffer tubes are not intentionally stranded or arranged around the central strength member in a particular manner and run substantially parallel to the central strength member).

Alternatively still, the present water-blocking elements may be positioned within a central buffer tube (i.e., the central buffer tube cable has a central buffer tube rather than a central strength member). Such a central buffer tube cable may position strength members elsewhere. For instance, metallic or non metallic (e.g., GRP) strength members may be positioned within the cable sheath itself, and/or one or more layers of high-strength yarns (e.g., aramid or non-aramid yarns) may be positioned parallel to or wrapped (e.g., contrahelically) around the central buffer tube (i.e., within the cable's interior space). Likewise, strength members can be included within the buffer tube's casing.

In other embodiments, the water-blocking elements according to the present invention may be placed within a slotted core cable. In a slotted core cable, optical fibers, individually or as a fiber ribbon, may be placed within pre shaped helical grooves (i.e., channels) on the surface of a central strength member, thereby forming a slotted core unit. The slotted core unit may be enclosed by a buffer tube. One or more of such slotted core units may be placed within a slotted core cable. For example, a plurality of slotted core units may be helically stranded around a central strength member.

Alternatively, the optical fibers may also be stranded in a maxitube cable design, whereby the optical fibers are stranded around themselves within a large multi-fiber loose buffer tube rather than around a central strength member. In other words, the large multi-fiber loose buffer tube is centrally positioned within the maxitube cable. For example, such maxitube cables may be deployed in optical ground wires (OPGW).

In another cabling embodiment, multiple buffer tubes may be stranded around themselves without the presence of a central member. These stranded buffer tubes may be surrounded by a protective tube. The protective tube may serve as the outer casing of the fiber optic cable or may be further surrounded by an outer sheath. The protective tube may tightly or loosely surround the stranded buffer tubes.

As will be known to those having ordinary skill in the art, additional elements may be included within a cable core. For example, copper cables or other active, transmission elements may be stranded or otherwise bundled within the cable sheath. Passive elements may also be placed within the cable core, such as between the interior walls of the buffer tubes and the enclosed optical fibers. Alternatively and by way of example, passive elements may be placed outside the buffer tubes between the respective exterior walls of the buffer tubes and the interior wall of the cable jacket, or, within the interior space of a buffer-tube-free cable.

As will be understood by those having ordinary skill in the art, a cable enclosing water-blocking elements as disclosed herein may have a sheath formed from various materials in various designs. Cable sheathing may be formed from polymeric materials such as, for example, polyethylene, polypropylene, polyvinyl chloride (PVC), polyamides (e.g., nylon), polyester (e.g., PBT), fluorinated plastics (e.g., perfluorethylene propylene, polyvinyl fluoride, or polyvinylidene difluoride), and ethylene vinyl acetate. The sheath and/or buffer tube materials may also contain other additives, such as nucleating agents, flame retardants, smoke-retardants, antioxidants, UV absorbers, and/or plasticizers.

The cable sheathing may be a single jacket formed from a dielectric material (e.g., non-conducting polymers), with or without supplemental structural components that may be used to improve the protection (e.g., from rodents) and strength provided by the cable sheath. For example, one or more layers of metallic (e.g., steel) tape along with one or more dielectric jackets may form the cable sheathing. Metallic or fiberglass reinforcing rods (e.g., GRP) may also be incorporated into the sheath. In addition, aramid, fiberglass, or polyester yarns may be employed under the various sheath materials (e.g., between the cable sheath and the cable core), and/or ripcords may be positioned, for example, within the cable sheath.

Similar to buffer tubes, optical-fiber cable sheaths typically have a circular cross section, but cable sheaths alternatively may have an irregular or non-circular shape (e.g., an oval, trapezoidal, or flat cross-section).

By way of example, the water blocking elements according to the present invention may be incorporated into single-fiber drop cables, such as those employed for Multiple Dwelling Unit (MDU) applications. In such deployments, the cable jacketing must exhibit crush resistance, abrasion resistance, puncture resistance, thermal stability, and fire resistance as required by building codes. An exemplary material for such cable jackets is thermally stable, flame-retardant polyurethane (PUR), which mechanically protects the optical fibers yet is sufficiently flexible to facilitate easy MDU installations. Alternatively, a flame-retardant polyolefin or polyvinyl chloride sheath may be used.

In general and as will be known to those having ordinary skill in the art, a strength member is typically in the form of a rod or braided/helically wound wires or fibers, though other configurations will be within the knowledge of those having ordinary skill in the art.

Optical-fiber cables containing water-blocking elements as disclosed may be variously deployed, including as drop cables, distribution cables, feeder cables, trunk cables, and stub cables, each of which may have varying operational requirements (e.g., temperature range, crush resistance, UV resistance, and minimum bend radius).

Such optical-fiber cables may be installed within ducts, microducts, plenums, or risers. By way of example, an optical-fiber cable may be installed in an existing duct or microduct by pulling or blowing (e.g., using compressed air). An exemplary cable installation method is disclosed in U.S. Patent No. 7,574,095 and U.S. Patent No. 7,665,902 of the present applicant . As noted, buffer tubes containing optical fibers (e.g., loose or ribbonized fibers) may be stranded (e.g., around a central strength member). In such configurations, an optical-fiber cable's protective outer sheath may have a textured outer surface that periodically varies lengthwise along the cable in a manner that replicates the stranded shape of the underlying buffer tubes. The textured profile of the protective outer sheath can improve the blowing performance of the optical-fiber cable. The textured surface reduces the contact surface between the cable and the duct or microduct and increases the friction between the blowing medium (e.g., air) and the cable. The protective outer sheath may be made of a low coefficient-of-friction material, which can facilitate blown installation. Moreover, the protective outer sheath can be provided with a lubricant to further facilitate blown installation.

In general, to achieve satisfactory long-distance blowing performance (e.g., between about 3,000 to 5,000 feet or more), the outer cable diameter of an optical-fiber cable should be no more than about 70 to 80 percent of the duct's or microduct's inner diameter.

Compressed air may also be used to install optical fibers in an air blown fiber system. In an air blown fiber system, a network of unfilled cables or microducts is installed prior to the installation of optical fibers. Optical fibers may subsequently be blown into the installed cables as necessary to support the network's varying requirements.

Moreover, the optical-fiber cables may be directly buried in the ground or, as an aerial cable, suspended from a pole or pylon. An aerial cable may be self-supporting or secured or lashed to a support (e.g., messenger wire or another cable). Exemplary aerial fiber optic cables include overhead ground wires (OPGW), all-dielectric self-supporting cables (ADSS), all dielectric lash cables (AD-Lash), and figure-eight cables, each of which is well understood by those having ordinary skill in the art. Figure-eight cables and other designs can be directly buried or installed into ducts, and may optionally include a toning element, such as a metallic wire, so that they can be found with a metal detector.

In addition, although the optical fibers may be further protected by an outer cable sheath, the optical fiber itself may be further reinforced so that the optical fiber may be included within a breakout cable, which allows for the individual routing of individual optical fibers.

To effectively employ optical fibers in a transmission system, connections are required at various points in the network. Optical-fiber connections are typically made by fusion splicing, mechanical splicing, or mechanical connectors.

The mating ends of connectors can be installed to the fiber ends either in the field (e.g., at the network location) or in a factory prior to installation into the network. The ends of the connectors are mated in the field in order to connect the fibers together or connect the fibers to the passive or active components. For example, certain optical-fiber cable assemblies (e.g., furcation assemblies) can separate and convey individual optical fibers from a multiple optical-fiber cable to connectors in a protective manner.

The deployment of such optical-fiber cables may include supplemental equipment. For instance, an amplifier may be included to improve optical signals. Dispersion compensating modules may be installed to reduce the effects of chromatic dispersion and polarization mode dispersion. Splice boxes, pedestals, and distribution frames, which may be protected by an enclosure, may likewise be included. Additional elements include, for example, remote terminal switches, optical network units, optical splitters, and central office switches.

A cable containing water-blocking elements according to the present invention may be deployed for use in a communication system (e.g., networking or telecommunications). A communication system may include fiber optic cable architecture such as fiber-to-the-node (FTTN), fiber-to-the-telecommunications enclosure (FTTE), fiber-to-the-curb (FTTC), fiber-to-the-building (FTTB), and fiber-to-the-home (FTTH), as well as long-haul or metro architecture. Moreover, an optical module or a storage box that includes a housing may receive a wound portion of the optical fiber disclosed herein. By way of example, the optical fiber may be wound with a bending radius of less than about 15 millimeters (e.g., 10 millimeters or less, such as about 5 millimeters) in the optical module or the storage box.

Thus, the invention a on file now relates to the following aspects and embodiments.

In a first aspect, the present invention relates to optical-fiber-cable structure, comprising:
an optical fiber;
a protective tube surrounding said optical fiber; and
a water-blocking element positioned between said optical fiber and said protective tube, said water-blocking element comprising water-swellable particulate powder thermally bonded to a fibrous carrier element;
wherein said fibrous carrier element comprises multicomponent fibers having a first fiber component and a second fiber component, said first fiber component having a lower bonding temperature than said second fiber component; and
wherein said water-blocking element is substantially free of an adhesive material for the purpose of bonding said water swellable particulate powder to said fibrous carrier element.

In an embodiment said protective tube comprises a polymeric material

In an embodiment fibrous carrier element is a nonwoven.

In an embodiment said fibrous carrier element is a yarn.

In an embodiment multicomponent fibers comprise bicomponent fibers having a bicomponent-fiber core and a bicomponent-fiber sheath, said bicomponent-fiber core having a higher bonding temperature than said bicomponent-fiber sheath.

In an embodiment said fibrous carrier element consists essentially of bicomponent fibers having a bicomponent-fiber core and a bicomponent-fiber sheath, said bicomponent-fiber core having a higher bonding temperature than said bicomponent-fiber sheath.

In an embodiment said water blocking element at least partially surrounds said optical fiber within said In an embodiment said water-swellable particulate powder is thermally bonded to only one side of said fibrous carrier element; and said fibrous carrier element is positioned adjacent to said optical fiber and said water swellable powder is positioned opposite said optical fiber.

In an embodiment said first fiber component comprises polyethylene.

In an embodiment said second fiber component comprises polypropylene.

In an embodiment said second fiber component comprises polyester.

In an embodiment said second fiber component comprises polyethylene terephthalate.

In an embodiment said water swellable particulate powder is thermally bonded to said fibrous carrier element by (i) heating said fibrous carrier element to a temperature that is at or above the bonding temperature of said first fiber component but below the bonding temperature of said second fiber component, and (ii) bonding said water swellable particulate powder to said fibrous carrier element.

In an embodiment bonding said water swellable particulate powder to said fibrous carrier element comprises bonding said water swellable particulate powder to said fibrous carrier element when said first fiber component is at or above its bonding temperature but when said second fiber component is below its bonding temperature.

In a second aspect the present invention relates to an optical-fiber-cable structure, comprising:
an optical fiber;
a protective tube surrounding said optical fiber, said protective tube comprising a polymeric material; and
a water-blocking element positioned between said optical fiber and said protective tube, said water-blocking element comprising water-swellable particulate powder thermally bonded to a fibrous carrier element;
wherein said fibrous carrier element comprises comingled fibers having a plurality of fibers formed from a first fiber material and a plurality of fibers formed from a second fiber material, said first fiber material having a lower bonding temperature than said second fiber material; and
wherein said water-blocking element is substantially free of an adhesive material for the purpose of bonding said water swellable particulate powder to said fibrous carrier element.

In an embodiment said fibrous carrier element is a nonwoven.

In an embodiment said fibrous carrier element is a yarn.

In an embodiment said water blocking element at least partially surrounds said optical fiber within said protective tube.

In an embodiment said water-swellable particulate powder is thermally bonded to only one side of said fibrous carrier element; and said fibrous carrier element is positioned adjacent to said optical fiber and said water swellable powder is positioned opposite said optical fiber.

In an embodiment said first fiber material comprises polyethylene.

In an embodiment said second fiber material comprises polypropylene.

In an embodiment said second fiber material comprises polyester.

In an embodiment said second fiber material comprises polyethylene terephthalate.

In an embodiment said water swellable particulate powder is thermally bonded to said fibrous carrier element by (i) heating said fibrous carrier element to a temperature that is at or above the bonding temperature of said first fiber material but below the bonding temperature of said second fiber material, and (ii) bonding said water swellable particulate powder to said fibrous carrier element.

In an embodiment bonding said water swellable particulate powder to said fibrous carrier element comprises bonding said water swellable particulate powder to said fibrous carrier element when said first fiber material is at or above its bonding temperature but when said second fiber material is below its bonding temperature.

In a third aspect, the present invention relates to an optical-fiber-cable structure, comprising:
an optical fiber;
a protective tube surrounding said optical fiber, said protective tube comprising a polymeric material; and
a water-blocking element positioned between said optical fiber and said protective tube, said water-blocking element comprising water-swellable particulate powder thermally bonded to a fibrous carrier tape;
wherein said fibrous carrier tape consists essentially of bicomponent fibers having a bicomponent-fiber core and a bicomponent-fiber sheath, said bicomponent-fiber core having a higher bonding temperature than said bicomponent-fiber sheath; and
wherein said water-blocking element is substantially free of an adhesive material for the purpose of bonding said water swellable particulate powder to said fibrous carrier tape.

In an embodiment said fibrous carrier tape is a fabric.

In an embodiment said water blocking element at least partially surrounds said optical fiber within said protective tube.

In an embodiment said water-swellable particulate powder is thermally bonded to only one side of said fibrous carrier tape; and said fibrous carrier tape is positioned adjacent to said optical fiber and said water swellable powder is positioned opposite said optical fiber.

In an embodiment said bicomponent-fiber sheath comprises polyethylene.

In an embodiment said bicomponent-fiber core comprises polypropylene.

In an embodiment said bicomponent-fiber core comprises polyester.

In an embodiment said bicomponent-fiber core comprises polyethylene terephthalate.

In an embodiment said water swellable particulate powder is thermally bonded to said fibrous carrier tape by (i) heating said fibrous carrier tape to a temperature that is at or above the bonding point of said bicomponent-fiber sheath but below the bonding point of said bicomponent-fiber core, and (ii) bonding said water swellable particulate powder to said fibrous carrier tape when said sheath is in a molten or softened state but when said core is in a solid state.

In an embodiment said water swellable particulate powder is thermally bonded to said fibrous carrier tape by (i) heating said fibrous carrier tape to a temperature that is at or above the bonding point of said bicomponent-fiber sheath but below the bonding point of said bicomponent-fiber core, and (ii) applying said water swellable particulate powder to said fibrous carrier tape when said sheath is in a molten or softened state but when said core is in a solid state.

In a fourth aspect, the present invention relates to a method for making an optical-fiber-cable structure, comprising:
providing a fibrous carrier element formed of multicomponent fibers having a first fiber component and a second fiber component, the first fiber component having a lower bonding temperature than the second fiber component;
heating the fibrous carrier element to a temperature that is at or above the bonding temperature of the first fiber component but below the bonding temperature of the second fiber component;
bonding water swellable particulate powder to the fibrous carrier element to form a water-blocking element; and
positioning an optical fiber and the water-blocking element within a protective tube.

In an embodiment the step of bonding water swellable particulate powder to the fibrous carrier element comprises, after the step of heating the fibrous carrier element, applying the water swellable particulate powder to the fibrous carrier element when the first fiber component is at or above its bonding temperature but when the second fiber component is below its bonding temperature.

In an embodiment the method comprises applying the water swellable particulate powder to the fibrous carrier element before or during the step of heating the fibrous carrier element.

In an embodiment the step of positioning an optical fiber and the water-blocking element within a protective tube comprises (i) at least partially surrounding the optical fiber with the water-blocking element and (ii) extruding a polymeric tube around the optical fiber and the water-blocking element to form the optical-fiber-cable structure.

In a fifth aspect the present invention relates to a method for making an optical-fiber-cable structure, comprising:
providing a fibrous carrier element formed of comingled fibers having a plurality of fibers formed from a first fiber material and a plurality of fibers formed from a second fiber material, the first fiber material having a lower bonding temperature than the second fiber material;
heating the fibrous carrier element to a temperature that is at or above the bonding temperature of the first fiber material but below the bonding temperature of the second fiber material;
bonding water swellable particulate powder to the fibrous carrier element to form a water-blocking element; and
positioning an optical fiber and the water-blocking element within a protective tube.

In an embodiment the step of bonding water swellable particulate powder to the fibrous carrier element comprises, after the step of heating the fibrous carrier element, applying the water swellable particulate powder to the fibrous carrier element when the first fiber material is at or above its bonding temperature but when the second fiber material is below its bonding temperature.

In an embodiment the method comprises applying the water swellable particulate powder to the fibrous carrier element before or during the step of heating the fibrous carrier element.

In an embodiment the step of positioning an optical fiber and the water-blocking element within a protective tube comprises (i) at least partially surrounding the optical fiber with the water-blocking element and (ii) extruding a polymeric tube around the optical fiber and the water-blocking element to form the optical-fiber-cable structure.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. An optical-fiber-cable structure, comprising:
an optical fiber;
a protective tube surrounding said optical fiber; and
a water-blocking element positioned between said optical fiber and said protective tube, said water-blocking element comprising water-swellable particulate powder thermally bonded to a fibrous carrier element;
wherein said fibrous carrier element comprises multicomponent fibers having a first fiber component and a second fiber component, said first fiber component having a lower bonding temperature than said second fiber component; and
wherein said water-blocking element is substantially free of an adhesive material for the purpose of bonding said water swellable particulate powder to said fibrous carrier element.

2. An optical-fiber-cable structure, comprising:
an optical fiber;
a protective tube surrounding said optical fiber; and
a water-blocking element positioned between said optical fiber and said protective tube, said water-blocking element comprising water-swellable particulate powder thermally bonded to a fibrous carrier element;
wherein said fibrous carrier element comprises comingled fibers having a plurality of fibers formed from a first fiber material and a plurality of fibers formed from a second fiber material, said first fiber material having a lower bonding temperature than said second fiber material; and
wherein said water-blocking element is substantially free of an adhesive material for the purpose of bonding said water swellable particulate powder to said fibrous carrier element.

3. The optical-fiber-cable structure according to Claim 1, wherein said protective tube comprises a polymeric material

4. The optical-fiber-cable structure according to Claim 1 or 2, wherein said fibrous carrier element is a nonwoven.

5. The optical-fiber-cable structure according to Claim 1 or 2, wherein said fibrous carrier element is a yarn.

6. The optical-fiber-cable structure according to Claim 1 or 2, wherein said fibrous carrier element of Claim 1 consists essentially of or wherein said multicomponent fibers of Claim 2 comprise:
bicomponent fibers having a bicomponent-fiber core and a bicomponent-fiber sheath, said bicomponent-fiber core having a higher bonding temperature than said bicomponent-fiber sheath.

7. The optical-fiber-cable structure according to Claim 1 or 2, wherein said water blocking element at least partially surrounds said optical fiber within said protective tube.

8. The optical-fiber-cable structure according to Claim 1 or 2, wherein:
said water-swellable particulate powder is thermally bonded to only one side of said fibrous carrier element; and
said fibrous carrier element is positioned adjacent to said optical fiber and said water swellable powder is positioned opposite said optical fiber.

9. The optical-fiber-cable structure according to Claim 1 or 2, wherein said first fiber component of claim 1 or material of claim 2 comprises polyethylene.

10. The optical-fiber-cable structure according to Claim 1 or, wherein said second fiber component of claim 1 or material of claim 2 comprises polypropylene or polyester or polyethylene terephthalate.

11. The optical-fiber-cable structure according to Claim 1 or 2, wherein said water swellable particulate powder is thermally bonded to said fibrous carrier element by (i) heating said fibrous carrier element to a temperature that is at or above the bonding temperature of said first fiber component but below the bonding temperature of said second fiber component, and (ii) bonding said water swellable particulate powder to said fibrous carrier element.

12. The optical-fiber-cable structure according to Claim 1 or 2, wherein bonding said water swellable particulate powder to said fibrous carrier element comprises bonding said water swellable particulate powder to said fibrous carrier element when said first fiber component is at or above its bonding temperature but when said second fiber component is below its bonding temperature.

13. An optical-fiber-cable structure, comprising:
an optical fiber;
a protective tube surrounding said optical fiber; and
a water-blocking element positioned between said optical fiber and said protective tube, said water-blocking element comprising water-swellable particulate powder thermally bonded to a fibrous carrier tape, preferably a fabric;
wherein said fibrous carrier tape consists essentially of bicomponent fibers having a bicomponent-fiber core and a bicomponent-fiber sheath, said bicomponent-fiber core having a higher bonding temperature than said bicomponent-fiber sheath; and
wherein said water-blocking element is substantially free of an adhesive material for the purpose of bonding said water swellable particulate powder to said fibrous carrier tape.

14. The optical-fiber-cable structure according to Claim 13, wherein said water swellable particulate powder is thermally bonded to said fibrous carrier tape by
(i) heating said fibrous carrier tape to a temperature that is at or above the bonding point of said bicomponent-fiber sheath but below the bonding point of said bicomponent-fiber core, and (ii) bonding said water swellable particulate powder to said fibrous carrier tape when said sheath is in a molten or softened state but when said core is in a solid state or (ii) applying said water swellable particulate powder to said fibrous carrier tape when said sheath is in a molten or softened state but when said core is in a solid state.

15. A method for making an optical-fiber-cable structure, comprising:
providing a fibrous carrier element formed of:
either multicomponent fibers having a first fiber component and a second fiber component, the first fiber component having a lower bonding temperature than the second fiber component; or
comingled fibers having a plurality of fibers formed from a first fiber material and a plurality of fibers formed from a second fiber material, the first fiber material having a lower bonding temperature than the second fiber material;
heating the fibrous carrier element to a temperature that is at or above the bonding temperature of the first fiber component of claim 1 or material of claim 2but below the bonding temperature of the second fiber component of claim 1 or material of claim 2;
bonding water swellable particulate powder to the fibrous carrier element to form a water-blocking element; and
positioning an optical fiber and the water-blocking element within a protective tube, preferably comprising (i) at least partially surrounding the optical fiber with the water-blocking element and (ii) extruding a polymeric tube around the optical fiber and the water-blocking element to form the optical-fiber-cable structure.

16. The method according to Claim 15, wherein the step of bonding water swellable particulate powder to the fibrous carrier element comprises, after the step of heating the fibrous carrier element, applying the water swellable particulate powder to the fibrous carrier element when the first fiber component of claim 1 or material of claim 2 is at or above its bonding temperature but when the second fiber component is below its bonding temperature.

17. The method according to Claim 15, comprising applying the water swellable particulate powder to the fibrous carrier element before or during the step of heating the fibrous carrier element.
